# EUROPÄISCHE PATENTANMELDUNG

(11) **EP 4 230 403 A1**
(43) Veröffentlichungstag der Anmeldung: **23.08.2023**
(21) Anmeldenummer: 23157450.0
(22) Anmeldetag: 20.02.2023
(51) Int. Cl.: B32B 17/10, B32B 3/08, E06B 3/66, G02F 1/01

(54) **VERBUNDSCHEIBENELEMENT, DIESES UMFASSENDES FENSTER SOWIE VERFAHREN ZU DESSEN HERSTELLUNG**

(30) Priorität: 22.02.2022 DE 102022104186
(71) Anmelder: New Ventures GmbH, 95111 Rehau (DE)
(72) Erfinder: Ehrenpfordt, Ricardo, 08056 Zwickau (DE); Ranfeld, Constanze, 95111 Rehau (DE)

(57) **Zusammenfassung**

Die vorliegende Erfindung bezieht sich auf ein Verbundscheibenelement (1) mit bereichsweise elektrisch steuerbaren Lichtdurchlässigkeitseigenschaften, die ein erstes Scheibenelement (2) und ein zweites Scheibenelement (3), wobei sich zwischen dem ersten Scheibenelement (2) und dem zweiten Scheibenelement (3) ein Zwischenraum (6) befindet; ein in dem Zwischenraum (6) angeordnetes Funktionselement (4), das mindestens zwei Funktionszonen (7, 7', 7", 7‴) umfasst, deren Lichtdurchlässigkeitseigenschaften unabhängig voneinander zumindest bereichsweise durch Anlegen einer elektrischen Spannung an zwei voneinander beabstandeten Flächenelektroden (7.21, 7.22) der jeweiligen Funktionszone (7, 7', 7", 7‴) veränderbar sind, wobei jede Flächenelektrode (7.21, 7.22) eine ihr zugeordnete Kontaktierstelle (8) umfasst; und einen Leiterträger (5) zur Kontaktierung der Kontaktierstellen (8) der Flächenelektroden (7.21, 7.22) umfasst, wobei der Leiterträger (5) eine Mehrzahl an Kontaktelementen (12) und zu jedem Kontaktelement (12) ein diesem Kontaktelement (12) zugeordnetes Leitungselement (13) umfasst, wobei sich das Verbundscheibenelement (1) erfindungsgemäß dadurch auszeichnet, dass der Leiterträger (5) mindestens eine der Anzahl der Kontaktierstellen (8) entsprechende Anzahl an Kontaktelementen (12) umfasst, wobei die Kontaktelemente (12) jeweils paarweise dazu eingerichtet sind, die Kontaktierstellen (8) der beiden Flächenelektroden (7.21, 7.22) jeweils einer Funktionszone (7, 7', 7", 7‴) zu kontaktieren, so dass jeweils die beiden Flächenelektroden (7.21, 7.22) einer Funktionszone (7, 7', 7", 7‴) im Bereich einer Kante (9) des Verbundscheibenelements (1) kontaktiert sind. Darüber hinaus bezieht sich die vorliegende Erfindung auf ein Fenster (100), das einen Fensterrahmen (101) und mindestens ein darin aufgenommenes erfindungsgemäßes Verbundscheibenelement (1) umfasst, sowie auf ein Verfahren zur Herstellung eines erfindungsgemäßen Verbundscheibenelements.

## Beschreibung

Die vorliegende Erfindung betrifft ein Verbundscheibenelement mit bereichsweise elektrisch steuerbaren Lichtdurchlässigkeitseigenschaften, das ein erstes Scheibenelement und ein zweites Scheibenelement, wobei sich zwischen dem ersten Scheibenelement und dem zweiten Scheibenelement ein Zwischenraum befindet; ein in dem Zwischenraum angeordnetes Funktionselement, das mindestens zwei Funktionszonen umfasst, deren Lichtdurchlässigkeitseigenschaften unabhängig voneinander zumindest bereichsweise durch Anlegen einer elektrischen Spannung an zwei voneinander beabstandete Flächenelektroden der jeweiligen Funktionszone veränderbar sind und jede Flächenelektrode eine ihr zugeordnete Kontaktierstelle umfasst; und einen Leiterträger zur Kontaktierung der Kontaktierstellen der Flächenelektroden umfasst, wobei der Leiterträger eine Mehrzahl an Kontaktelementen und zu jedem Kontaktelement ein diesem Kontaktelement zugeordnetes Leitungselement umfasst. Darüber hinaus betrifft die vorliegende Erfindung ein Fenster, das einen Fensterrahmen und mindestens ein darin aufgenommenes, derartiges Verbundscheibenelement umfasst, sowie ein Verfahren zur Herstellung eines derartigen Verbundscheibenelements.

Verbundscheibenelemente mit elektrisch steuerbaren Lichtdurchlässigkeitseigenschaften und Verfahren zur ihrer Herstellung sind im Stand der Technik bekannt. Dabei erfolgt die Kontaktierung der einzelnen Funktionszonen derzeit mittels eines Kupferklebebands (Busbar) sowie zusätzlichem Aufbringen, insbesondere Auflöten, von Kupferfähnchen und Anlöten von Drähten/Kabeln in manueller Fertigung für jede Funktionszone einzeln. Dieser manuelle Fertigungsprozess ist mit einem hohen Zeitaufwand verbunden und ist daher sehr kostenintensiv und zudem schlecht reproduzierbar. Darüber hinaus neigen die aufgebrachten Kontaktierungsfähnchen dazu, von der jeweiligen Funktionszone abzureißen, sodass das erhaltene Verbundscheibenelement nur eine geringe Robustheit besitzt.

Um die Kontaktierung des Funktionselements gut reproduzierbar und daher maschinell durchführen zu können, schlägt die DE 10 2019 135 413 A1 vor, diese Kontaktierung durch einen vorgefertigten Leiterträger für mehrere, insbesondere alle Funktionsbereich eines Verbundscheibenelements vorzunehmen. Dieser Leiterträger hat mehrere Kontaktelemente, so dass jeweils eine Flächenelektrode mehrerer Funktionselemente vom Leiterträger kontaktiert werden kann. Diese Kontaktelemente, denen jeweils ein Leitungselement zugeordnet ist, sind so entlang des Leiterträgers angeordnet, dass die einzelnen Kontaktierstellen des Funktionselements jeweils einen Kontaktbereich des Leiterträgers kontaktieren. Die Kontaktierung durch einen Leiterträger gemäß der DE 10 2019 135 413 A1 vereinfacht zwar den Herstellungsprozess eines Verbundscheibenelements mit elektrisch steuerbaren Lichtdurchlässigkeitseigenschaften. Eine weitere Vereinfachung scheint jedoch erforderlich.

An dieser Stelle setzt die vorliegende Erfindung ein, der die Aufgabe zugrunde liegt, ein Verbundscheibenelement zur Verfügung zu stellen, das die Nachteile des Stands der Technik zumindest teilweise überwindet. Insbesondere soll das erfindungsgemäße Verbundscheibenelement gut reproduzierbar und damit in höherem Umfang maschinell herstellbar sein sowie eine hohe Robustheit besitzen. Ferner liegt die Aufgabe der vorliegenden Erfindung in der Bereitstellung eines Fensters, das mindestens ein erfindungsgemäßes Verbundscheibenelement umfasst, sowie in der Bereitstellung eines Verfahrens zur Herstellung eines erfindungsgemäßen Verbundscheibenelements.

Diese und andere Aufgaben werden erfindungsgemäß durch ein Verbundscheibenelement mit den Merkmalen des Anspruchs 1, durch ein Fenster den Merkmalen des Anspruchs 9 sowie durch ein Verfahren mit den Merkmalen des Anspruchs 10 gelöst. Bevorzugte Ausführungsformen der vorliegenden Erfindung sind in den abhängigen Ansprüchen beschrieben.

Gemäß der vorliegenden Erfindung wurde erkannt, dass der Prozess der Kontaktierung der Funktionsbereiche dadurch weiter vereinfacht und besser reproduzierbar gemacht werden kann, wenn neben der ersten Flächenelektrode auch die zweite Flächenelektrode desselben Funktionsbereichs durch einen einzigen vorgefertigten Leiterträger kontaktiert wird. Auf diese Weise ist eine Kontaktierung der zweiten Flächenelektrode im Bereich der gegenüberliegenden Kante des Verbundscheibenelements nicht mehr erforderlich, sodass dass das üblicherweise als Folie ausgebildete Funktionselement lediglich entlang einer Kante geöffnet werden muss. Dadurch kann die Kontaktierung aller Flächenelektroden durch ein vorgefertigtes Element für mehrere, insbesondere alle Funktionsbereich eines Verbundscheibenelements gleichzeitig erfolgt. Erfindungsgemäß wird dies dadurch realisiert, dass die Kontaktierung mittels des Leiterträgers, der zur Kontaktierung beider Kontaktierstellen der jeweiligen Funktionszone dient, erfolgt. Dazu umfasst der Leiterträger eine Mehrzahl an Kontaktelementen und zu jedem Kontaktelement ein diesem zugeordnetes Leitungselement. Diese Kontaktelemente sind erfindungsgemäß jeweils paarweise dazu eingerichtet, die Kontaktierstellen der beiden Flächenelektroden einer Funktionszone zu kontaktieren.

Dadurch sind jeweils die beiden Flächenelektroden einer Funktionszone im Bereich einer Kante des erfindungsgemäßen Verbundscheibenelements kontaktiert.

Dementsprechend liegt die vorliegende Erfindung in der Bereitstellung einer Verbundscheibenelements mit bereichsweise elektrisch steuerbaren Lichtdurchlässigkeitseigenschaften, das ein erstes Scheibenelement und ein zweites Scheibenelement, wobei sich zwischen dem ersten Scheibenelement und dem zweiten Scheibenelement ein Zwischenraum befindet; ein in dem Zwischenraum angeordnetes Funktionselement, das mindestens zwei Funktionszonen umfasst, deren Lichtdurchlässigkeitseigenschaften unabhängig voneinander zumindest bereichsweise durch Anlegen einer elektrischen Spannung an zwei voneinander beabstandete Flächenelektroden der jeweiligen Funktionszone veränderbar sind und jede Flächenelektrode eine ihr zugeordnete Kontaktierstelle umfasst; und einen Leiterträger zur Kontaktierung der Kontaktierstellen der Flächenelektroden, wobei der Leiterträger eine Mehrzahl an Kontaktelementen und zu jedem Kontaktelement ein diesem Kontaktelement zugeordnetes Leitungselement umfasst, umfasst, wobei sich das Verbundscheibenelement erfindungsgemäß dadurch auszeichnet, dass der Leiterträger mindestens eine der Anzahl der Kontaktierstellen entsprechende Anzahl an Kontaktelementen umfasst, wobei die Kontaktelemente jeweils paarweise dazu eingerichtet sind, die Kontaktierstellen der beiden Flächenelektroden jeweils einer Funktionszone zu kontaktieren, so dass jeweils die beiden Flächenelektroden einer Funktionszone im Bereich einer Kante des Verbundscheibenelements kontaktiert sind. Darüber hinaus bezieht sich die vorliegende Erfindung auf ein Fenster, das einen Fensterrahmen und mindestens ein darin aufgenommenes, erfindungsgemä-ßes Verbundscheibenelement umfasst. Letztlich stellt die vorliegende Erfindung auch ein Verfahren zur Herstellung eines Verbundscheibenelements mit bereichsweise elektrisch steuerbaren Lichtdurchlässigkeitseigenschaften zur Verfügung, das die folgenden Stufen umfasst:
(a) Bereitstellen eines ersten Scheibenelements und eines zweiten Scheibenelements;
(b) Aufbringen eines Funktionselements auf das erste Scheibenelement, wobei das Funktionselement mindestens zwei Funktionszonen umfasst, deren Lichtdurchlässigkeitseigenschaften unabhängig voneinander zumindest bereichsweise durch Anlegen einer elektrischen Spannung an zwei voneinander beabstandeten Flächenelektroden der jeweiligen Funktionszone veränderbar sind und jede Flächenelektrode eine ihr zugeordnete Kontaktierstelle umfasst;
(c) Aufbringen eines Leiterträgers zur Kontaktierung der Kontaktierstellen der Flächenelektroden, wobei der Leiterträger mindestens eine der Anzahl der Kontaktierstellen entsprechende Anzahl an Kontaktelementen und zu jedem Kontaktelement ein diesem Kontaktelement zugeordnetes Leitungselement umfasst, wobei die Kontaktelemente jeweils paarweise dazu eingerichtet sind, die Kontaktierstellen der beiden Flächenelektroden jeweils einer Funktionszone zu kontaktieren, so dass jeweils die beiden Flächenelektroden einer Funktionszone im Bereich einer Kante des Verbundscheibenelements kontaktierbar sind, wobei jede Kontaktierstelle der Flächenelektroden jeweils durch einen Kontaktbereich des Leiterträgers kontaktiert wird; und
(d) Aufbringen des zweiten Scheibenelements unter Erhalt des Verbundscheibenelements.

Wie hierin verwendet bezieht sich der Begriff "Fenster" insbesondere auf Fenster in Gebäuden oder Fahrzeugen. Dabei ist es bevorzugt, wenn es sich bei dem Fenster um ein Kunststofffenster handelt. Es kommen aber auch Metallfenster, Holzfenster sowie Verbundfenster in Betracht. Handelt es sich um ein Kunststofffenster, so ist als Hauptmaterial der Rahmenprofile des erfindungsgemäßen Fensters Polyvinylchlorid (PVC), insbesondere Hart-PVC (PVC-U) oder glasfaserverstärktes PVC, das jeweils auch nachchloriertes PVC (PVC-C) enthalten kann und dem zusätzlich Zusatzstoffe wie z. B. Stabilisatoren, Weichmacher, Pigmente und dergleichen zugesetzt sind, bevorzugt. Durch Verschweißen von auf Gehrung geschnittenen Stücken der Rahmenprofile kann ein Fensterrahmen erhalten werden.

In Bezug auf das erfindungsgemäße Verbundscheibenelement kann es von Vorteil sein, wenn das Kontaktieren der Kontaktierstellen der beiden Flächenelektroden durch elektrisch leitfähige Klebepads erfolgt, die auf die Kontaktelemente des Leiterträgers aufgebracht sind. Durch den Einsatz elektrisch leitfähiger Klebepads kann das Erzeugen eines Kontakts zwischen den Kontaktierstellen der Flächenelektroden und der Kontaktelemente des Leiterträgers besonders effektiv und schnell erfolgen. Zudem trägt dies zur verbesserten Reproduzierbarkeit des Herstellungsprozesses bei.

Es kann sich auch auf günstig erweisen, wenn sämtliche Kontaktierstellen des Funktionselements im Bereich einer Kante des Verbundscheibenelements durch den Leiterträger kontaktiert sind.

Es kann auch günstig sein, wenn die Kontaktelemente des Leiterträgers an einer Fläche des Leiterträgers angeordnet sind und der Leiterträger derart gefaltet ist, dass jeweils ein Paar benachbarter Kontaktelemente die Kontaktierstellen der beiden Flächenelektroden einer Funktionszone kontaktiert. Alternativ dazu kann es hilfreich sein, wenn die Kontaktelemente des Leiterträgers an einander gegenüberliegenden Flächen des Leiterträgers angeordnet sind und der Leiterträger derart auf das Funktionselement aufgebracht ist, dass jeweils ein Paar benachbarter Kontaktelemente die Kontaktierstellen der beiden Flächenelektroden einer Funktionszone kontaktiert. Diese beiden Ausführungsformen ermöglichen ein sicheres Kontaktieren der Flächenelektroden bei zugleich einfacher Geometrie des Leiterträgers.

In bevorzugten Ausführungsformen des erfindungsgemäßen Verbundscheibenelements sind die Kontaktierstellen des Funktionselements im Zwischenraum zwischen den Scheibenelementen angeordnet. Damit liegen die Kontaktierstellen der Flächenelektroden geschützt zwischen den Scheibenelementen des erfindungsgemäßen Verbundscheibenelements, was dessen Robustheit weiter erhöht. Zusätzlich oder alternativ dazu können zumindest die Kontaktelemente des Leiterträgers im Zwischenraum angeordnet sein. Zum einen macht dies die Kontaktierstellen des Funktionselements besser zugänglich, wenn diese ebenfalls im Zwischenraum zwischen den Scheibenelementen anegordnet sind, zum anderen erhöht dies die Robustheit der Kontakte in dem erfindungsgemäßen Verbundscheibenelement weiter.

Ebenso kann es von Nutzen sein, wenn die Leitungselemente des Leiterträgers mindestens zwei voneinander elektrisch isolierte, schichtartige Metalllagen aufweisen. Dadurch ist gewährleistet, dass der Leiterträger eine geringe Breite aufweisen kann und besonders vorteilig zumindest teilweise zwischen den Scheibenelementen angeordnet werden kann, um die Robustheit des erfindungsgemäßen Verbundscheibenelements weiter zu erhöhen.

Bevorzugt ist das das Funktionselement als SPD-Funktionselement, PDLC-Funktionselements, EC-Funktionselement oder als Kombination der vorgenannten Funktionselemente ausgebildet. Derartige Funktionselemente stellen die gängigen aktiven Schichten dar, deren optischen Eigenschaften, wie beispielsweise Milchigkeit und/oder Transparenz, durch Variieren einer das Funktionselement angelegten Spannung verändert werden können. Bei SPD-Funktionselementen sind in einer aktiven Schicht lichtabsorbierende oder lichtreflektierende Partikel, vorzugsweise mit einem mittleren Durchmesser von weniger als 1 µm, in einer Flüssigkeit suspendiert. Beidseitig der Suspension befindet sich eine transparente, leitfähige Schicht (z. B. Indium-Zinn-Oxid, ITO). Beim Anlegen einer Spannung richten sich die suspendierten Partikel aus. Dadurch wird das Funktionselement durchsichtig. Als Beispiele für SPD-Funktionselemente (suspended particle device) können beispielsweise die in der EP 0 876 608 B1 und der WO 2011/033313 A1 beschriebenen Elemente angeführt werden. Bei einem PDLC-Funktionselement (polymer dispersed liquid crystal) sind als aktive Schicht Flüssigkristalle in eine Polymermatrix eingebettet. Auf beiden Seiten dieser aktiven Schicht ist wieder jeweils eine transparente, leitfähige Schicht (z. B. Indium-Zinn-Oxid, ITO) angeordnet. Die Flüssigkristalle bewirken eine starke Streuung des durch die aktive Schicht scheinenden Lichts, das Funktionselement ist undurchsichtig bzw. opak. Beim Anlegen einer Spannung richten sich die Flüssigkristalle zueinander aus, so dass die Lichttransmission durch das Funktionselement erhöht wird. Das Funktionselement wird transparent. Ein EC-Funktionselement (electrochromic device) ist durchsichtig, wenn keine Spannung an das Funktionselement angelegt. Beim Anlegen einer Spannung ändern sich die optischen Eigenschaften, insbesondere die Farbe des Funktionselements, durch einen reversiblen chemischen Prozess. Das EC-Funktionselement bleibt bei Anlegen einer Spannung transparent, erscheint aber dunkler. Der Grad der Verdunkelung kann durch Variieren der angelegten Spannung kontinuierlich eingestellt werden.

Es kann auch hilfreich sein, wenn der Leiterträger ein Anschlusselement umfasst, das außerhalb des Zwischenraums angeordnet ist. Dieser vereinfacht den Anschluss des erfindungsgemäßen Verbundscheibenelements an eine Steuereinrichtung, beispielsweise einen Controller, beträchtlich. Dabei kann es sich auch als günstig erweisen, wenn das Anschlusselement eine der Anzahl von Leitungselementen des Leiterträgers entsprechende Anzahl von Anschlussstellen aufweist. Dies trägt wieder zu einem einfachen Verbinden der Komponenten bei.

Zusätzlich oder alternativ dazu kann es bevorzugt sein, wenn die Leitungselemente (der Kontaktelemente des Leiterträger über eine Controllereinheit mittels Bussignalen geschalten werden.

In vorteilhaften Ausgestaltungen des erfindungsgemäßen Verbundscheibenelements weist der Leiterträger den Kontaktelementen zugeordnete elektronische Einheiten auf, welche die Leitungselemente der Kontaktelemente zu einem gemeinsamen busbasierten Leitungsbereich bündeln. Dadurch ist es möglich, die Anzahl von Leitungselementen, welche über den Leiterträger zum Anschlusselement geführt sind, sowie die Anzahl von Anschlussstellen des Anschlusselementes und die Anzahl von Anschlussstellen an der Steuereinrichtung deutlich zu reduzieren. Die Baugrößen aller Komponenten werden dadurch erheblich reduziert.

Zusätzlich oder alternativ dazu kann es auch von Vorteil sein, wenn der Leiterträger weitere elektronische Bauelemente, insbesondere Sensoren, umfasst, die insbesondere zur Detektion von Beschleunigungen, Temperatur, Feuchte, Druck, Licht, Trübung, Schall, Luftqualität und dergleichen eingerichtet sind. Mittels der Beschleunigungs- und/oder Schallsensorik kann es u.a. möglich sein, mechanische Einwirkungen auf das erfindungsgemäße Verbundscheibenelement im Falle eines Einbruchs zu detektieren. Mittels der Temperatur-, Feuchte-, Druck- und Lichtsensorik kann ein Klimamonitoring umgesetzt werden. So kann es u.a. sinnvoll sein, innerhalb einer Regelkette die Funktionselemente auf Basis von gemessenen Temperaturen zu schalten, um u.a. eine zu starke Erwärmung eines Raumes zu verhindern oder diese zu ermöglichen. Mittels der Lichtsensorik kann es möglich sein, innerhalb einer Regelkette die Funktionselemente auf Basis des gemessenen Lichteinfalls automatisch zu schalten. Zusätzlich kann es möglich sein, mittels der Licht- und Trübungssensorik die einwandfreie Funktion der Funktionselemente und des gesamten Systems bis zum Controller nach Installation und über Lebensdauer zu überwachen.

Hinsichtlich des erfindungsgemäßen Fensters ist es bevorzugt, wenn das erfindungsgemä-ße Verbundscheibenelement eine Scheibe einer Isolierverglasung bildet, die durch einen oder mehrere Randverbunde mit einer oder mehreren weiteren Scheiben zu der Isolierverglasung zusammengefügt sind. Grundsätzlich ist es aber auch denkbar, dass das erfindungsgemäße Verbundscheibenelement als alleiniges Verglasungselement in dem erfindungsgemäßen Fenster eingesetzt wird.

Die Scheibenelemente sind vorzugsweise aus Glas, insbesondere aus Floatglas, Quarzglas, Flachglas, Kalk-Natron-Glas, Borosilikatglas, oder aus klaren Kunststoffe, wie beispielsweise Polycarbonat (PC) oder Polymethylmethacrylat (PMMA). Die Scheibenelemente sind bevorzugt klar und transparent, können aber auch getönt oder gefärbt sein. Die Scheibenelemente besitzen eine Dicke von vorzugsweise 1 mm bis 5 mm. Grundsätzlich kann das erfindungsgemäße Verbundscheibenelement eine beliebige Form besitzen, wobei rechteckige Ausgestaltungen bevorzugt sind. Das erfindungsgemäße Verbundscheibenelement ist vorzugsweise im Wesentlichen eben oder leicht oder stark gebogen.

Das Funktionselement weist elektrisch steuerbare optische Eigenschaften auf und ist in mindestens zwei Funktionszonen untergliedert. Zentraler Bestanteil jeder Funktionszone ist dabei eine aktive Schicht, die je nach Art des Funktionselements unterschiedlich ist. In bevorzugten Ausführungsformen der vorliegenden Erfindung ist das Funktionselement als PDLC-Funktionselement ausgebildet. In der aktiven Schicht sind dann unausgerichtete Flüssigkristalle in einer Polymermatrix enthalten. Dies resultiert in einer starken Streuung des durchscheinenden Lichts. Ohne angelegte elektrische Spannung zeichnet sich das PDLC-Funktionselement durch ein weißes, milchiges Aussehen aus, das beispielsweise als Sichtschutz dienen kann. Wird an die aktive Schicht eine elektrische Spannung angelegt, richten sich die Flüssigkristalle in eine Richtung aus und die Transmission von Licht durch die aktive Schicht wird erhöht. Das erfindungsgemäße Verbundscheibenelement wird dadurch transparent. Auf beiden Seiten der aktiven Schicht befindet sich jeweils eine als Flächenelektrode fungierende elektrisch leitfähige Beschichtung. Die elektrisch leitfähigen Beschichtungen sind transparent. Dabei kann es sich bevorzugt um Schichten aus ITO (Indium-Zinn-Oxid) handeln, die häufig nur wenige Nanometer dick sind. Daran schließen sich beidseitig Trägerfolien an, bei denen es sich bevorzugt um Polymerfolien, insbesondere um PET-Folien handelt. Die Dicke der Trägerfolien liegt im Bereich von 0,02 mm bis 3 mm, vorzugsweise im Bereich von 0,25 mm bis 1 mm. Die Außenseiten des Funktionselements und damit die Verbindung zu den Scheibenelementen bilden häufig Zwischenschichten. Bei den Zwischenschichten handelt es sich bevorzugt um thermoplastische Kunststofffolien, insbesondere um Folien aus Polyvinylbutyral (PVB) mit einer Dicke im Bereich von 0,02 mm bis 3 mm, vorzugsweise im Bereich von 0,25 mm bis 1 mm.

In einer weiteren bevorzugten Ausführungsformen der vorliegenden Erfindung ist das Funktionselement als SPD-Funktionselement ausgebildet. Bei derartigen SPD-Funktionselementen sind in einer aktiven Schicht lichtabsorbierende oder lichtreflektierende Partikel, vorzugsweise mit einem mittleren Durchmesser von weniger als 1 µm, in einer Flüssigkeit suspendiert. Ohne angelegte elektrische Spannung streuen und absorbieren die Partikel Licht. Das SPD-Funktionselementen ist zwar transparent, erscheint aber vergleichsweise dunkel. Wird an die aktive Schicht eine elektrische Spannung angelegt, richten sich die Partikel wiederum Flüssigkristalle in eine Richtung aus und die Transmission von Licht durch die aktive Schicht wird erhöht. Das SPD-Funktionselement erscheint stärker transparent. Der Aufbau eines solchen SPD-Funktionselements entspricht im Wesentlichen dem Aufbau eines PDLC-Funktionselements, wie er oben erläutert wurde. Ein derartiges SPD-Funktionselement kann vorzugsweise noch eine UV-absorbierende Schicht umfassen. Diese UV-absorbierende Schicht ist dann vorzugsweise auf einer Seite der aktiven Schicht zwischen der Trägerfolie und der Zwischenschicht angeordnet.

In Bezug auf das erfindungsgemäße Herstellungsverfahren ist anzumerken, dass die Abfolge der Stufen des erfindungsgemäßen Verfahrens auch in einer anderen Reihenfolge durchgeführt werden können, ohne den Umfang der Erfindung zu verlassen. So ist es beispielsweise auch denkbar, zunächst die Kontaktierstellen des Funktionselements mit den entsprechenden Kontaktelementen des Leiterträgers zu kontaktieren und den dabei erhaltenen Verbund zwischen das erste Scheibenelement und das zweite Scheibenelement zu laminieren.

Dabei kann es bevorzugt sein, wenn das Kontaktieren der Kontaktierstellen des Funktionselements mit den Kontaktelementen des Leiterträgers mittels elektrisch leitfähige Klebepads erfolgt. Durch den Einsatz elektrisch leitfähige Klebepads kann das Erzeugen eines Kontakts zwischen den Kontaktierstellen der Flächenelektroden und der Kontaktelemente des Leiterträgers besonders effektiv und schnell erfolgen. Zudem trägt dies zur verbesserten Reproduzierbarkeit des Herstellungsprozesses bei. Alternativ dazu ist es auch möglich, zum Kontaktieren einen elektrisch leitfähigen Klebstoff einzusetzen. Auch dies macht das Kontaktieren besonders einfach und reproduzierbar. Es ist aber ebenso möglich, das Kontaktieren der Kontaktstellen des Funktionselements mit den Kontaktbereichen des Leiterträgers mittels Löten, Schweißen und/oder Crimpen zu bewerkstelligen.

In bevorzugten Ausführungsformen des erfindungsgemäßen Verfahrens sind die Leitungselemente des Leiterträgers an ein Anschlusselement des Leiterträgers geführt und werden mittels einem steckbaren Anschlusselement kontaktiert.

Besonders bevorzugten Ausführungsformen werden sämtliche kontaktiert Stellen des Funktionselements im Bereich einer Kante des Verbundscheibenelements durch den Leiterträger kontaktiert.

Das erfindungsgemäße Verbundscheibenelement, das erfindungsgemäße Fenster sowie einzelne Teile davon können auch zeilenweise oder schichtweise unter Verwendung eines zeilenaufbauenden oder schichtaufbauenden Fertigungsverfahrens (z. B. 3D-Druck) hergestellt werden.

Im Folgenden soll die vorliegende Erfindung unter Bezugnahme auf die in den Figuren dargestellten Ausführungsformen im Detail erläutert werden. Dabei zeigen
- Figur 1: eine schematische Darstellung eines Verbundscheibenelements gemäß einer Ausführungsform der vorliegenden Erfindung;
- Figur 2: eine schematische Querschnittsdarstellung des in dem in Fig. 1 gezeigten Verbundscheibenelement eingesetzten Funktionselements;
- Figur 3: eine weitere schematische Querschnittsdarstellung des in dem in Fig. 1 gezeigten Verbundscheibenelement eingesetzten Funktionselements vor dem Kontaktieren;
- Figur 4: eine schematische Darstellung des in dem in Fig. 1 gezeigten Verbundscheibenelement eingesetzten Funktionselements vor dem Kontaktieren;
- Figur 5: eine schematische Darstellung des zum Kontaktieren des in Fig. 4 gezeigten Funktionselements verwendeten Leiterträgers;
- Figur 6: eine schematische Darstellung des mit dem Leiterträger gemäß Fig. 5 kontaktierten Funktionselements gemäß Fig. 4;
- Figur 7: eine schematische Darstellung des Funktionselements gemäß Fig. 6 von der Unterseite betrachtet;
- Figur 8: eine schematische Darstellung einer weiteren Ausführungsform eines erfindungsgemäßen verwendbaren Leiterträgers;
- Figur 9: eine schematische Darstellung eines mit dem Leiterträger gemäß Fig. 8 kontaktierten Funktionselements gemäß Fig. 4; und
- Figur 10: eine schematische Darstellung eines Fensters, dass das in Fig. 1 gezeigte erfindungsgemäßen Verbundscheibenelement umfasst.

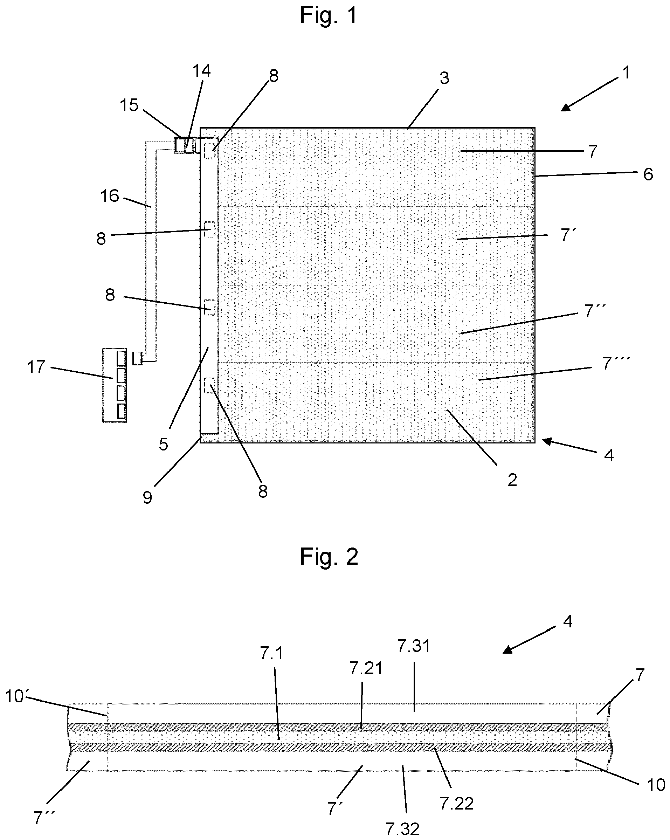

In Figur 1 ist ein Verbundscheibenelement 1 gemäß einer Ausführungsform der vorliegenden Erfindung in einer schematischen Darstellung gezeigt. Das erfindungsgemäße Verbundscheibenelement 1 umfasst ein erstes Scheibenelement 2, ein dahinter verborgenes, zweites Scheibenelement 3, ein Funktionselement 4 sowie einen Leiterträger 5. Dabei sind das Funktionselement 4 sowie der überwiegende Teil des Leiterträgers 5 in einem zwischen dem ersten Scheibenelement 2 und dem zweiten Scheibenelement 3 gebildeten Zwischenraum 6 angeordnet.

In der in Fig. 1 dargestellten Ausführungsform umfasst das Funktionselement 4 vier Funktionszonen 7, 7', 7", 7‴, wobei das Funktionselement 4 in anderen Ausführungsformen auch eine andere Anzahl an Funktionszonen 7, 7', 7", 7‴ umfassen kann. Jede Funktionszone 7, 7', 7", 7‴ weist dabei zwei Kontaktierstellen 8, an der die jeweilige Funktionszone 7, 7', 7", 7‴ mit dem Leiterträger 5 elektrisch leitend kontaktiert sind. Die Kontaktierstellen 8 sind dabei im Randbereich des Funktionselements 4 entlang einer Kante 9 angeordnet, in der Ausführungsform gemäß Fig. 1 im Bereich der an der linken Seite angeordnet Kante 9. In Fig. 1 ist dabei für jede Funktionszone 7, 7', 7", 7‴ nur eine Kontaktierstelle 8 dargestellt. Die die jeweils andere Kontaktierstelle 8 befindet sich an der Rückseite des Funktionselements 4 und wird von dort kontaktiert.

Der grundsätzliche Aufbau des Funktionselements 4 ist in Fig. 2 am Beispiel der Funktionszone 7' in einer schematischen Querschnittsdarstellung im Bereich der Kante 9 gezeigt. In dem erfindungsgemäßen Verbundscheibenelement 1 ist das Funktionselement 4 im Zwischenraum 6 zwischen dem ersten Scheibenelement 2 und dem zweiten Scheibenelement 3 angeordnet. Das Funktionselement 4 ist in der beschriebenen Ausführungsform als PDLC-Funktionselement ausgebildet. Die beiden Scheibenelemente 2, 3 sind in der Ausführungsform des erfindungsgemäßen Verbundglaselements 1 gemäß Fig. 1 als FloatglasScheiben mit einer Dicke von etwa 3 mm ausgebildet. Zentral in Fig. 2 ist die Funktionszone 7' zu sehen, die zu beiden Seiten hin jeweils über eine Segmenttrennung 10, 10' an die benachbarten Funktionszonen 7, 7" angrenzt. Das Funktionselement 4 ist als eine Mehrschichtfolie ausgebildet, die eine aktive Schicht 7.1 umfasst. Auf beiden Seiten der aktiven Schicht 7.1 befindet sich jeweils eine als Flächenelektrode 7.21 und 7.22 fungierende elektrisch leitfähige Beschichtung, die jeweils von einer Trägerfolie 7.31 und 7.32 abgedeckt sind. Bei der aktiven Schicht 7.1 handelt es sich in der dargestellten Ausführungsform um eine Polymermatrix mit darin dispergierten Flüssigkristallen, die sich in Abhängigkeit der an die Flächenelektroden angelegten elektrischen Spannung ausrichten können. So können die optischen Eigenschaften der Funktionszone 7' durch Variieren der an die Flächenelektroden 7.21 und 7.22 angelegten Spannung verändert werden. Die Trägerfolien 7.31 und 7.32 sind in der gezeigten Ausführungsform PET-Folien mit einer Dicke von beispielsweise 70 µm. Die auf die Trägerfolien 7.31 und 7.32 aufgebrachten, als Flächenelektroden 7.21 und 7.22 fungierenden elektrisch leitfähigen Beschichtungen sind beispielsweise Schichten aus ITO, die eine Dicke von wenigen Nanometern besitzen. Die Trägerfolien 7.31 und 7.32 können jeweils über in Fig. 2 nicht dargestellte Zwischenschichten mit dem ersten Scheibenelement 2 bzw. dem zweiten Scheibenelement 3 verbunden sein. Bei den Zwischenschichten kann es sich dabei bevorzugt um Folien aus Polyvinylbutyral (PVB) mit einer Dicke von etwa 0,2 mm handeln.

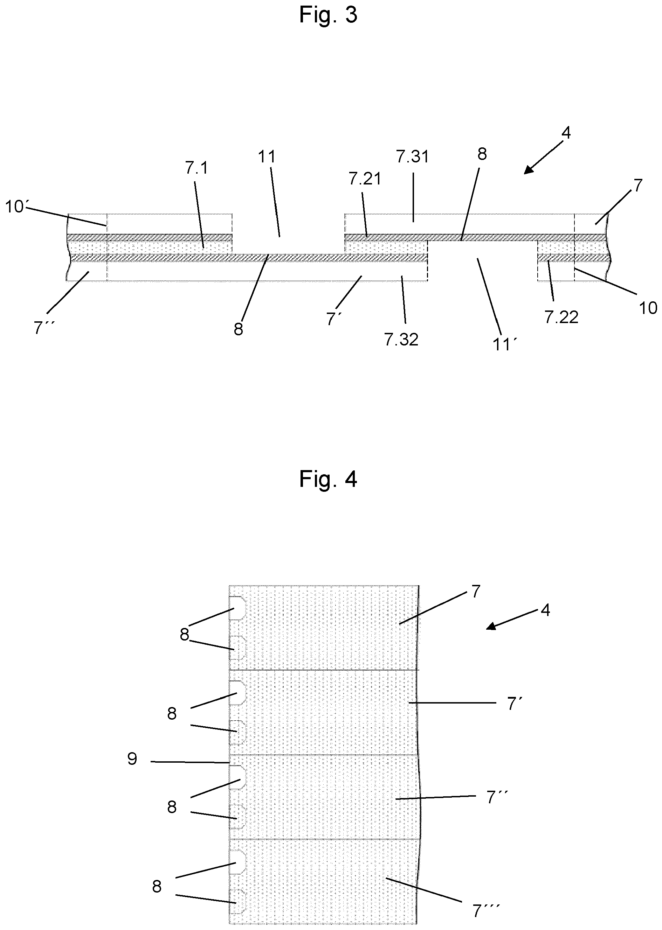

Der in Fig. 2 dargestellte Ausschnitt aus dem Funktionselement 4 ist in Fig. 3 einer weiteren schematischen Querschnittsdarstellung gezeigt, die das Funktionselement 4 schematisch nach der Vorbereitung des Kontaktierens zeigt. Darin ist zu erkennen, dass im Bereich der Kante 9 zwei Ausnehmungen 11, 11' von gegenüberliegenden Seiten des Funktionselements 4 in dieses eingebracht worden sind. Für die Ausnehmung 11 wurde dabei die Trägerfolie 7.31, die Flächenelektrode 7.21 und die aktive Schicht 7.1 entfernt, sodass die Flächenelektrode 7.22 in diesem Bereich freigelegt ist. In entsprechender Weise wurde für die Ausnehmung 11' die Flächenelektrode 7.21 freigelegt, in dem die Trägerfolie 7.32, die Flächenelektrode 7.22 und die aktive Schicht 7.1 im Bereich der Ausnehmung 11'entfernt worden sind. Die in den Ausnehmungen 11, 11' freigelegten Abschnitte der Flächenelektroden 7.21 und 7.22 fungieren als Kontaktierstellen 8 der Funktionszone 7'.

Das resultierende Funktionselement 4 ist in Fig. 4 in einer schematischen Teildarstellung gezeigt. Das Funktionselement 4 umfasst vier Funktionszonen 7, 7', 7", 7‴. Jede dieser Funktionszonen 7, 7', 7", 7‴ weist im Bereich der Kante 9 zwei Kontaktierstellen 8 auf, in denen jeweils eine der Flächenelektroden 7.21 und 7.22 freigelegt ist. Die beiden Kontaktierstellen 8 jeder Funktionszone 7, 7', 7", 7‴ befinden sich dabei an einander gegenüberliegenden Seiten der jeweiligen Funktionszone 7, 7', 7", 7‴.

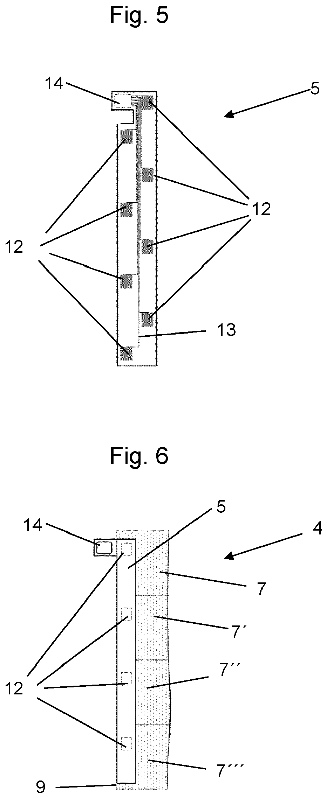

Das Kontaktieren der Kontaktierstellen 8 des Funktionelements 4 selbst erfolgt über den Leiterträger 5, der in Fig. 5 in einer schematischen Darstellung gezeigt ist. In dieser Ausführungsform ist der Leiterträger 5 als FPC ("flexible printed circuit") ausgebildet. Der Leiterträger 5 ist flexibel ausgestaltet und weist im zentralen Bereich eine Knicklinie (nicht dargestellt) auf, die in der dargestellten Ausführungsform als Materialschwächung ausgebildet ist und sich über die gesamte Länge des Leiterträgers 5 erstreckt. Entlang dieser Knicklinie lässt sich der Leiterträger 5 entsprechend falten. Darüber hinaus umfasst der Leiterträger 5 acht Kontaktelemente 12. Entsprechend der vier Funktionszonen 7, 7', 7", 7‴ des Funktionselements 4 lassen sich diese Kontaktelemente 12 in vier Paare unterteilen, wobei ein Kontaktelement 12 eines jeden Paars auf einer Seite der Knicklinie des Leiterträgers 5 angeordnet ist. Jedes dieser Paare von Kontaktelementen 12 ist einem der Funktionszonen 7, 7', 7", 7‴ des Funktionselements 4 zuzuordnen. Der Abstand der Kontaktelemente 12 eines Paares in Längsrichtung des Leiterträgers 5 entspricht dabei dem Abstand der Kontaktierstellen 8 der jeweiligen Funktionszone 7, 7', 7", 7‴. In der dargestellten Ausführungsform des Leiterträgers 5 sind die Kontaktelemente 12 jeweils als metallisierte Flächen ausgebildet, die mittels elektrisch leitfähiger Klebepads kontaktiert werden. Von jedem Kontaktelement 12 geht ein Leitungselement 13 aus. Die Leitungselemente 13 sind voneinander isoliert. Die Leitungselemente 13 des Leiterträgers 5 münden in einem Anschlusselement 14. In dem Anschlusselement 14 befindet sich eine Aufnahme, in die ein Anschlussstück 154 eines Kabels 16 aufgenommen, insbesondere eingesteckt ist. Über das Kabel 16 ist das Funktionselement 4 an eine Steuereinrichtung 17 anschließbar, die beispielsweise als Controller ausgebildet ist. Die Steuereinrichtung 17 kann beispielsweise in der Armierungskammer eines Fensterflügels angeordnet werden. Die Steuereinrichtung 17 ist an eine externe Stromversorgung angeschlossen, so dass über sie eine variable Spannung an jede Funktionszone 7, 7', 7", 7‴ des Funktionselements 4 angelegt werden kann, über die die Lichtdurchlässigkeitseigenschaften des erfindungsgemäßen Verbundscheibenelements 1 bereichsweise variiert werden können.

In alternativen Ausführungsformen des Leiterträgers 5 kann auch Trägermaterial jeweils zwischen zwei Kontaktelementen 12 an einer Seite des Leiterträgers (bezogen auf die Knicklinie) ausgespart werden. Dadurch kann sich eine Art wellenförmige Gesamtform des Leiterträgers 5 ergeben.

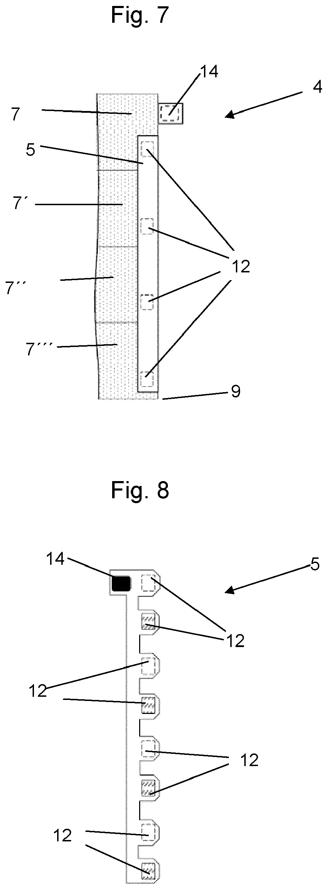

Zur Erzeugung der Kontakte wird die in Fig. 5 rechte Seite des Leiterträgers 5 von unten auf das Funktionselement aufgebracht, sodass die mit elektrisch leitfähige Klebepads belegten Kontaktelemente 12 auf dieser Seite in den Ausnehmungen 11 an der der Ansichtsseite in Fig. 4 abgewandten Seite des Funktionselements 4 zu liegen kommen. Durch Andrücken der Kontaktelemente 12 wird ein Kontakt zum freigelegten Bereich der Flächenelektrode 7.21 der jeweiligen Funktionszone 7, 7', 7", 7‴ hergestellt. Daraufhin wird der Leiterträger 5 entlang der Knickstelle gefaltet. Die mit elektrisch leitfähigen Klebepads versehenen Kontaktelemente 12 an der in Fig. 5 linken Seite des Leiterträgers 5 kommen dadurch über die Ausnehmungen 11' an der Ansichtsseite des Funktionselements 4. Wiederum durch Andrücken der Kontaktelemente 12 wird ein Kontakt zum freigelegten Bereich der Flächenelektrode 7.22 hergestellt. Das Ergebnis dieses Vorgangs ist das mit dem Leiterträger 5 kontaktierte Funktionselement 4, das in Fig. 6 in einer schematischen Ausschnittsdarstellung gezeigt ist. In Fig. 6 ist gut zu erkennen, dass die Kontaktelemente 12, die in Fig. 5 auf der rechten Seite der Knicklinie des Leiterträgers 5 angeordnet sind, die Kontaktierstellen 8 des Funktionselements 4 an der Sichtseite des Funktionselements 4 kontaktieren. Entsprechend kontaktieren die Kontaktelemente 12, die in Fig. 5 auf der linken Seite der Knicklinie des Leiterträgers 5 angeordnet sind, die Kontaktierstellen 8 an der Unterseite des Funktionselements. Diese Unterseitenansicht ist in Fig. 7 in einer schematischen Teildarstellung gezeigt.

Zur Herstellung des erfindungsgemäßen Verbundscheibenelements 1 wird das Funktionselement 4 zunächst in die Funktionszonen 7, 7', 7", 7‴ partitioniert. Daraufhin werden die Ausnehmungen 11, 11' erzeugt wie in Bezug auf Fig. 3 erläutert. Anschließend erfolgt das Kontaktieren der Flächenelektroden 7.21 und 7.22 unter Verwendung des Leiterträgers 5 wie in Bezug auf Fig. 4 bis Fig. 7 erläutert. Das resultierende Funktionselement 4 wird dann abschließend zwischen die Scheibenelemente 2, 3 laminiert. Die beschriebene Vorgehensweise macht die Herstellung des erfindungsgemäßen Verbundscheibenelements 1 gut reproduzierbar, so dass dies auch maschinell erfolgen kann.

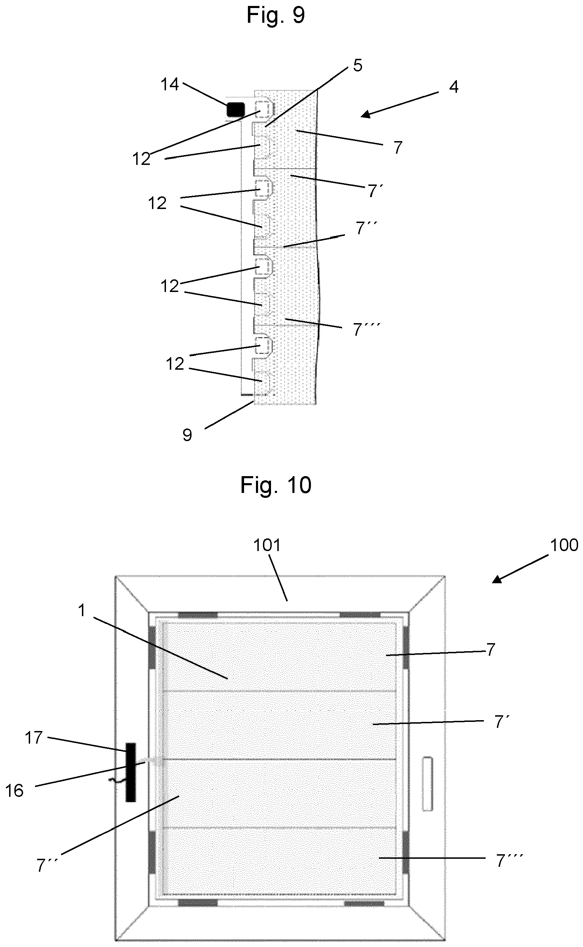

In Fig. 8 ist eine schematische Darstellung einer weiteren Ausführungsform eines Leiterträgers 5 gezeigt. Auch in dieser Ausführungsform ist der Leiterträger 5 als FPC ("flexible printed circuit") ausgebildet. Der Leiterträger 5 ist flexibel ausgestaltet, weist im Gegensatz zum Leiterträger 5 gemäß Fig. 5 allerdings keine Knicklinie auf. Entsprechend der vier Funktionszonen 7, 7', 7", 7‴ des Funktionselements 4 umfasst der Leiterträger 5 wiederum acht Kontaktelemente 12, die paarweise jeweils einer Funktionszone 7, 7', 7", 7‴ des Funktionselements 4 zuzuordnen sind. In jedem Paar von Kontaktelementen 12 ist ein Kontaktelement 12 an der Oberseite des Leiterträgers 5, während das andere an der Unterseite des Leiterträgers 5 angeordnet ist. Zwischen den Kontaktelementen 12 eines Paares befindet sich ein Freischnitt. Der Abstand zwischen den Kontaktelementen 12 eines Paares entspricht wiederum dem Abstand zwischen den Kontaktierstellen 8 der betreffenden Funktionszone 7, 7', 7", 7‴. Die Kontaktelemente 12 sind in der dargestellten Ausführungsform des Leiterträgers 5 wieder jeweils als metallisierte Flächen ausgebildet, auf die elektrisch leitfähige Klebepads ausgebrchat sind, über die die elektrische Kontaktierung der Kontaktierstellen 8 der betreffenden Funktionszone 7, 7', 7", 7‴ erfolgt. Von jedem Kontaktelement 12 geht ein Leitungselement 13 aus. Die Leitungselemente 13 sind voneinander isoliert. Die Leitungselemente 11 des Leiterträgers 5 münden in einem Anschlusselement 14. Aufgrund der Flexibilität der Leiterträgers 5 und zwischen den Elementen eines Paares von Kontaktelementen 12 angeordneten Freischnitts kann das Kontaktieren der Kontaktierstellen 8 der einzelnen Funktionszone 7, 7', 7", 7‴ an einander entgegengesetzten Seiten des Funktionselements 4 erfolgen. Das Ergebnis des Kontaktierens ist das in Fig. 9 in einer schematischen Teildarstellung gezeigte Funktionselement 4.

In Fig. 10 ist schematisch eine Ausführungsform eines erfindungsgemäßen Fenster 100 gezeigt. Dabei ist ein Verbundscheibenelement 1 in einen Fensterrahmen 101 aufgenommen, der in der dargestellten Ausführungsform lediglich als Flügelrahmen ausgebildet ist. Der so gebildete Fensterflügel liegt im geschlossenen Zustand des erfindungsgemäßen Fensters 100 über Dichtungen an einem nicht dargestellten Blendrahmen an und ist dabei über Beschlagmittel (nicht dargestellt) drehbar am Blendrahmen gelagert. Ebenso sind in Fig. 10 das Kabel 16, über das das Funktionselement 4 an die Steuereinrichtung 17 angeschlossen ist, und die b als Controller ausgebildete Steuereinrichtung 17 schematisch angedeutet. Gemäß der dargestellten Ausführungsform sind das Kabel 16 und die Steuereinrichtung 17 in der Armierungskammer des Fensterrahmens aufgenommen.

Die vorliegende Erfindung wurde exemplarisch unter Bezugnahme auf die in den Figuren dargestellten Ausführungsformen der vorliegenden Erfindung beschrieben. Es versteht sich, dass die vorliegende Erfindung nicht auf die in den Figuren dargestellte Ausführungsformen beschränkt ist, sondern sich der Umfang der vorliegenden Erfindung aus den beigefügten Ansprüchen ergibt.

## Patentansprüche

1. Verbundscheibenelement (1) mit bereichsweise elektrisch steuerbaren Lichtdurchlässigkeitseigenschaften, umfassend:
ein erstes Scheibenelement (2) und ein zweites Scheibenelement (3), wobei sich zwischen dem ersten Scheibenelement (2) und dem zweiten Scheibenelement (3) ein Zwischenraum (6) befindet;
ein in dem Zwischenraum (6) angeordnetes Funktionselement (4), das mindestens zwei Funktionszonen (7, 7', 7", 7‴) umfasst, deren Lichtdurchlässigkeitseigenschaften unabhängig voneinander zumindest bereichsweise durch Anlegen einer elektrischen Spannung an zwei voneinander beabstandeten Flächenelektroden (7.21, 7.22) der jeweiligen Funktionszone (7, 7', 7", 7‴) veränderbar sind und jede Flächenelektrode (7.21, 7.22) eine ihr zugeordnete Kontaktierstelle (8) umfasst; und
einen Leiterträger (5) zur Kontaktierung der Kontaktierstellen (8) der Flächenelektroden (7.21, 7.22), wobei der Leiterträger (5) eine Mehrzahl an Kontaktelementen (12) und zu jedem Kontaktelement (12) ein diesem Kontaktelement (12) zugeordnetes Leitungselement (13) umfasst,
**dadurch gekennzeichnet, dass**
der Leiterträger (5) mindestens eine der Anzahl der Kontaktierstellen (8) entsprechende Anzahl an Kontaktelementen (12) umfasst, wobei die Kontaktelemente (12) jeweils paarweise dazu eingerichtet sind, die Kontaktierstellen (8) der beiden Flächenelektroden (7.21, 7.22) jeweils einer Funktionszone (7, 7', 7", 7‴) zu kontaktieren, so dass jeweils die beiden Flächenelektroden (7.21, 7.22) einer Funktionszone (7, 7', 7", 7‴) im Bereich einer Kante (9) des Verbundscheibenelements (1) kontaktiert sind.

2. Verbundscheibenelement (1) gemäß Anspruch 1, **dadurch gekennzeichnet, dass** das Kontaktieren der Kontaktierstellen (8) der beiden Flächenelektroden (7.21, 7.22) durch elektrisch leitfähige Klebepads erfolgt, die auf die Kontaktelemente (12) des Leiterträgers (5) aufgebracht sind.

3. Verbundscheibenelement (1) gemäß Anspruch 1 oder Anspruch 2, **dadurch gekennzeichnet, dass** sämtliche Kontaktierstellen (8) des Funktionselements (4) im Bereich einer Kante (9) des Verbundscheibenelements (1) durch den Leiterträger (5) kontaktiert sind.

4. Verbundscheibenelement (1) gemäß einem der Ansprüche 1 bis 3, **dadurch gekennzeichnet, dass** die Kontaktelemente (12) des Leiterträgers (5) an einer Fläche des Leiterträgers (5) angeordnet sind und der Leiterträger (5) derart gefaltet ist, dass jeweils ein Paar benachbarter Kontaktelemente (12) die Kontaktierstellen (8) der beiden Flächenelektroden (7.21, 7.22) einer Funktionszone (7, 7', 7", 7‴) kontaktiert.

5. Verbundscheibenelement (1) gemäß einem der Ansprüche 1 bis 3, **dadurch gekennzeichnet, dass** die Kontaktelemente (12) des Leiterträgers (5) an einander gegenüberliegenden Flächen des Leiterträgers (5) angeordnet sind und der Leiterträger (5) derart auf das Funktionselement (4) aufgebracht ist, dass jeweils ein Paar benachbarter Kontaktelemente (12) die Kontaktierstellen (8) der beiden Flächenelektroden (7.21, 7.22) einer Funktionszone (7, 7', 7", 7‴) kontaktiert.

6. Verbundscheibenelement (1) gemäß einem der Ansprüche 1 bis 5, **dadurch gekennzeichnet, dass** das Funktionselement (4) als SPD-Funktionselement, PDLC-Funktionselements, EC-Funktionselement oder als Kombination der vorgenannten Funktionselemente ausgebildet ist.

7. Verbundscheibenelement (1) gemäß einem der Ansprüche 1 bis 6, **dadurch gekennzeichnet, dass** der Leiterträger (5) ein Anschlusselement (13) umfasst, das außerhalb des Zwischenraums (6) angeordnet ist.

8. Verbundscheibenelement (1) gemäß einem der Ansprüche 1 bis 6, **dadurch gekennzeichnet, dass** die Leitungselemente (13) der Kontaktelemente (12) des Leiterträger (5) über eine Controllereinheit mittels Bussignalen geschalten werden.

9. Fenster (100), umfassend einen Fensterrahmen (101) und mindestens ein darin aufgenommenes Verbundscheibenelement (1) gemäß einem der Ansprüche 1 bis 8.

10. Verfahren zur Herstellung eines Verbundscheibenelements (1) mit bereichsweise elektrisch steuerbaren Lichtdurchlässigkeitseigenschaften, das die folgenden Stufen umfasst:
(a) Bereitstellen eines ersten Scheibenelements (2) und eines zweiten Scheibenelements (3);
(b) Aufbringen eines Funktionselements (4) auf das erste Scheibenelement (2), wobei das Funktionselement (2) mindestens zwei Funktionszonen (7, 7', 7", 7‴) umfasst, deren Lichtdurchlässigkeitseigenschaften unabhängig voneinander zumindest bereichsweise durch Anlegen einer elektrischen Spannung an zwei voneinander beabstandete Flächenelektroden (7.21, 7.22) der jeweiligen Funktionszone (7, 7', 7", 7‴) veränderbar sind und jede Flächenelektrode (7.21, 7.22) eine ihr zugeordnete Kontaktierstelle (8) umfasst;
(c) Aufbringen eines Leiterträgers (5) zur Kontaktierung der Kontaktierstellen (8) der Flächenelektroden (7.21, 7.22), wobei der Leiterträger (5) mindestens eine der Anzahl der Kontaktierstellen (8) entsprechende Anzahl an Kontaktelementen (12) und zu jedem Kontaktelement (12) ein diesem Kontaktelement (12) zugeordnetes Leitungselement (13) umfasst, wobei die Kontaktelemente (12) jeweils paarweise dazu eingerichtet sind, die Kontaktierstellen (8) der beiden Flächenelektroden (7.21, 7.22) jeweils einer Funktionszone (7, 7', 7", 7‴) zu kontaktieren, so dass jeweils die beiden Flächenelektroden (7.21, 7.22) einer Funktionszone (7, 7', 7", 7‴) im Bereich einer Kante (9) des Verbundscheibenelements (1) kontaktierbar sind, wobei jede Kontaktierstelle (8) der Flächenelektroden (7.21, 7.22) jeweils durch einen Kontaktbereich (12) des Leiterträgers (5) kontaktiert wird; und
(d) Aufbringen des zweiten Scheibenelements (3) unter Erhalt des Verbundscheibenelements (1).

11. Verfahren (1) gemäß Anspruch 10, **dadurch gekennzeichnet, dass** das Kontaktieren der Kontaktierstellen (8) des Funktionselements (4) mit den Kontaktelementen (12) des Leiterträgers (5) mittels elektrisch leitfähiger Klebepads erfolgt.

12. Verfahren gemäß Anspruch 12 oder Anspruch 13, **dadurch gekennzeichnet, dass** die Leitungselemente (13) des Leiterträgers (5) an ein Anschlusselement (14) des Leiterträgers (5) geführt sind und mittels einem steckbaren Anschlussstück (15) kontaktiert werden.
